# EUROPÄISCHE PATENTSCHRIFT

(11) **EP 1 093 546 B1**
(45) Veröffentlichungstag und Bekanntmachung des Hinweises auf die Patenterteilung: **12.05.2004**
(21) Anmeldenummer: 00926760.0
(22) Anmeldetag: 27.03.2000
(51) Int. Cl.: F15B 15/28, H02K 11/00, G01D 11/28, F21V 8/00

(54) **ANZEIGEEINRICHTUNG**
DISPLAY DEVICE
DISPOSITIF D'AFFICHAGE

(30) Priorität: 08.05.1999 DE 19921474
(43) Veröffentlichungstag der Anmeldung: 25.04.2001
(73) Patentinhaber: Festo Ag & Co., 73734 Esslingen (DE)
(72) Erfinder: BÖCK, Jürgen, D-73760 Ostfildern (DE); LANGKO, Matthias, D-70178 Stuttgart (DE); HAUBER, Frank, D-73249 Wernau (DE); ORSZULIK, Karl, D-73730 Esslingen (DE)
(74) Vertreter: Abel, Martin, Dipl.-Ing.
(86) Internationale Anmeldenummer: PCT/EP2000/002679
(87) Internationale Veröffentlichungsnummer: WO 2000/068579

(56) Entgegenhaltungen:
- EP-A- 0 824 196
- DE-A- 3 704 469
- DE-U- 8 909 155
- PATENT ABSTRACTS OF JAPAN vol. 014, no. 575 (M-1062), 20. Dezember 1990 (1990-12-20) & JP 02 248708 A (KOGANEI), 4. Oktober 1990 (1990-10-04)

## Beschreibung

Die Erfindung betrifft eine Anzeigeeinrichtung zum optischen Anzeigen eines für eine Antriebsvorrichtung relevanten Betriebszustandes, wobei die Antriebsvorrichtung ein in einem Gehäuse bewegbares Antriebsteil aufweist.

Auf dem Sektor der fluidbetätigten Antriebe, beispielsweise Arbeitszylinder oder sonstige Linearantriebe, besteht häufig die Problematik, die Relativposition zwischen dem durch Fluidkraft bewegbaren Antriebsteil und dem Gehäuse durch eine Sensoreinrichtung zu erfassen. Bei der Sensoreinrichtung handelt es sich beispielsweise um einen Näherungsschalter, wie er von der Anmelderin unter der Typenbezeichnung SME-8-K-LED-230 vertrieben wird. Dieser ist mit einer Anzeigeeinrichtung in Gestalt einer Leuchtdiode ausgestattet, die den Schaltzustand anzeigt, indem sie bei Betätigung des Näherungsschalters aufleuchtet.

Eine derartige Anzeigeeinrichtung hat den Nachteil, daß sie bei einer ungünstigen Orientierung des am Einsatzort installierten Antriebes nicht oder zumindest nicht ohne weiteres sichtbar ist. Die visuelle Überwachung des Betriebszustandes der Antriebsvorrichtung wird dadurch erschwert.

Es ist die Aufgabe der vorliegenden Erfindung, eine Anzeigeeinrichtung der eingangs genannten Art zu schaffen, die die Überwachung mindest eines für eine Antriebsvorrichtung relevanten Betriebszustandes, vor allem auch bei ungünstigen Montagebedingungen, erleichtert.

Zur Lösung dieser Aufgabe ist eine Anzeigeeinrichtung vorgesehen, die mit einem Anzeigeelement ausgestattet ist, das in einer sich entlang mindestens 180° eines Umfangs des Gehäuses der Antriebsvorrichtung erstreckenden Weise an dem Gehäuse angeordnet oder anzuordnen ist und das in der dem Gehäuse zugeordneten Gebrauchsposition während seines Anzeigezustandes über den zugeordneten Gehäuseumfang verteilt Licht aussendet.

Auf diese Weise ist die visuelle Überwachung von Betriebszuständen einer Antriebsvorrichtung auch unter ungünstigen Montagebedingungen, bei denen der Gehäuseumfang größtenteils nicht einsehbar ist, wesentlich vereinfacht. Während seines Anzeigezustandes, also während seiner Aktivierung, sendet das Anzeigeelement über den von ihm erfaßten Umfang des Gehäuses verteilt Licht aus, so daß das Lichtsignal auch bei ungünstiger Orientierung des Gehäuses gut sichtbar ist. Ferner ist das optische Erkennen relevanter Betriebszustände unabhängig vom Anbringungsort einer gegebenenfalls vorhandenen und zur Erfassung des fraglichen Betriebszustandes dienenden Sensoreinrichtung. Das Anzeigeelement kann sich über nur einen Teilumfang von mindestens 180° des zugeordneten Gehäuses erstrecken. Möglich ist aber auch eine in sich geschlossene Ringbauweise, die eine vollumfängliche Zuordnung zu einem Gehäuse ermöglicht.

Vorteilhafte Weiterbildungen der Erfindung gehen aus den Unteransprüchen hervor.

Es ist von Vorteil, wenn das Anzeigeelement in einer nach radial außen hin offenen Aufnahmevertiefung des Gehäuses angeordnet ist. Auf diese Weise kann bei Bedarf ein Schutz vor mechanischen Einflüssen erzielt werden, der dann optimal ist, wenn das Anzeigeelement vollständig versenkt in einer solchen Aufnahmevertiefung einsitzt. Dabei kann vorgesehen sein, daß die radiale Außenfläche des Anzeigeelements etwa bündig mit den benachbarten Außenflächen des Gehäuses verläuft. Eine gewisse Auswölbung kann von Vorteil sein, um auch bei axialer Betrachtungsrichtung den Anzeigezustand zuverlässig erkennbar zu machen. Handelt es sich bei dem Anzeigeelement um einem Anzeigering, erfolgt zweckmäßigerweise eine Fixierung in einer ringförmigen Aufnahmevertiefung.

Insbesondere wenn es sich bei der Antriebsvorrichtung um einen elektrisch und/oder fluidisch betätigbaren Linearantrieb handelt, der über zumindest einen stirnseitigen Deckel und einen sich daran anschließenden, das Antriebsteil enthaltenden rohrförmigen Körper aufweist, ist es vorteilhaft, wenn das Anzeigeelement zwischen diesen beiden Bestandteilen plaziert ist. Dabei kann das Anzeigeelement eine Mehrfachfunktion haben und gleichzeitig auch die Funktion einer Dichtung übernehmen, der die beiden Bestandteile fluiddicht miteinander verbindet. Auf diese Weise kann auf zusätzliche Abdichtmaßnahmen meist verzichtet werden.

Das Anzeigeelement verfügt zweckmäßigerweise über einen Anzeigekörper mit zumindest partiell und vorzugsweise insgesamt lichtdurchlässigen Eigenschaften, wobei er vorzugsweise aus Kunststoffmaterial besteht. Dieser Anzeigekörper kann mit einem oder mehreren Leuchtmitteln, beispielsweise Leuchtdioden, versehen sein, die das Licht beispielsweise punktuell erzeugen, das durch entsprechende lichtleitende Eigenschaften des Anzeigekörpers über dessen gesamte Länge verteilt nach außen abstrahlt.

Das Anzeigeelement ist zweckmäßigerweise mit einer geeigneten Schnittstelle ausgestattet, über die die Einspeisung des die Lichtausgabe hervorrufenden Signals möglich ist. Hierbei kann es sich um eine elektrische Schnittstelle handeln, über die elektrische Betätigungssignale eingespeist werden, auf Grund derer integrierte Leuchtmittel Lichtenergie abgeben. Denkbar wäre aber auch die Realisierung optischer Schnittstellen, über die bereits optische Signale in das Anzeigeelement eingeleitet werden können.

Das Anzeigelement kann in vorteilhafter Bauform ringförmig als Anzeigering ausgeführt sein, der sich in Gebrauchsposition über den gesamten Umfang des zugeordneten Gehäuses erstrecken kann. Dadurch ist ein optimales Erkennen des Anzeigezustandes möglich. Handelt es sich bei der Antriebsvorrichtung um einen Linearantrieb länglicher Bauart, wird der Anzeigering zweckmäßigerweise koaxial zur Längsachse des Gehäuses installiert, so daß der Anzeigezustand in jedem Bereich des Außenumfanges des Gehäuses zuverlässig überwacht werden kann.

Die Ringform des Anzeigeelements läßt sich unter Berücksichtigung der baulichen Gegebenheiten der zugeordneten Antriebsvorrichtung gestalten. Es sind mithin nicht nur kreisringförmige Gestaltungen möglich, sondern beispielsweise auch ovale oder mehreckförmige Verläufe.

Nachfolgend wird die Erfindung anhand der beiliegenden Zeichnung näher erläutert. In dieser zeigen:
- Fig. 1: die Seitenansicht einer exemplarisch dargestellten Antriebsvorrichtung, die mit einer bevorzugten Bauform der erfindungsgemäßen Anzeigeeinrichtung ausgestattet ist,
- Fig. 2: den in Fig. 1 markierten Ausschnitt II in vergrößerter Teildarstellung und teilweise im Längsschnitt,
- Fig. 3: die Anordnung aus Fig. 1 in einer Stirnansicht mit Blickrichtung gemäß Pfeil III,
- Fig. 4: eine weitere Ausführungsform der Anzeigeeinrichtung in einer der Fig. 2 entsprechenden Darstellungsweise und
- Fig. 5: eine weitere Ausführungsform der Anzeigeeinrichtung in einer der Fig. 3 entsprechenden schematischen Darstellungsweise.

Die einzelnen Figuren zeigen zunächst jeweils eine allgemein mit Bezugsziffer 1 bezeichnete Antriebsvorrichtung, die dazu eingesetzt werden kann, beliebige Gegenstände, beispielsweise Bestandteile von Maschinen, zu verlagern. Es handelt sich bei der abgebildeten Antriebsvorrichtung 1 um einen durch Fluidkraft betätigten Linearantrieb in Gestalt eines Pneumatikzylinders.

Die Erfindung läßt sich aber auch in Verbindung mit anderen Arten von Antriebsvorrichtungen einsetzen, beispielsweise im Zusammenhang mit elektrisch oder hydraulisch betätigten Linearantrieben.

Die beispielsgemäße Antriebsvorrichtung 1 enthält ein längliches Gehäuse 2, das einen zylindrischen Innenraum 3 definiert, in dem ein die Funktion eines Kolbens erfüllendes Antriebsteil 4 axial verschiebbar angeordnet ist.

Ein mit dem Antriebsteil 4 bewegungsgekoppeltes Betätigungselement 5 durchsetzt die Wand des Gehäuses 2 unter Abdichtung und verfügt an seinem außerhalb des Gehäuses 2 liegenden Abschnitt über geeignete Befestigungsmittel 6, an denen sich der zu bewegende Gegenstand festlegen läßt.

Das Gehäuse 2 enthält im einzelnen einen rohrförmigen Körper 7, an den an beiden Stirnseiten jeweils ein Deckel 8, 9 fest angesetzt ist. Das vorliegend als Kolbenstange ausgeführte Betätigungselement 5 durchsetzt den vorderen Deckel 8, wenngleich auch eine Bauform möglich wäre, bei der sich eine durchgehende Kolbenstange durch beide Deckel 8, 9 hindurch erstreckt.

Das Antriebsteil 4 unterteilt den Innenraum 3 axial in zwei Arbeitsräume, die jeweils mit einem das Gehäuse 2 durchsetzenden eigenen Fluidkanal 12, 13 kommunizieren, über den in an sich bekannter Weise eine Einspeisung oder Abfuhr eines fluidischen Druckmediums möglich ist, um das Antriebsteil 4 einschließlich dem Betätigungselement 5 zu einer Linearbewegung in der einen oder anderen axialen Richtung zu veranlassen.

Das Antriebsteil 4 ist mit einem Aktivierungsglied 14 versehen, das in der Lage ist, eine außerhalb des Innenraumes 3 angeordnete Sensoreinrichtung 15 berührungslos zu betätigen. Diese Sensoreinrichtung 15 enthält bei den Ausführungsbeispielen mindestens einen und zweckmäßigerweise zumindest zwei magnetfeldempfindliche Sensoren 16, die im Hubbereich des Aktivierungsgliedes 14 mit möglichst geringem radialem Abstand zum Aktivierungsglied 14 plaziert sind. Das Aktivierungsglied 14 ist vorliegend ein Permanentmagnet, dessen Magnetfeld die Sensoren 16 aktiviert, wenn das Antriebsteil 4 in etwa auf gleicher axialer Höhe mit dem betreffenden Sensor 16 zu liegen kommt.

Die Sensoren 16 rufen bei Aktivierung Sensorsignale hervor, die über elektrische Leiter 17 einer integrierten oder externen Steuereinrichtung 18 zugeführt werden können, um in Abhängigkeit davon die Betätigung der Antriebsvorrichtung 1 zu steuern.

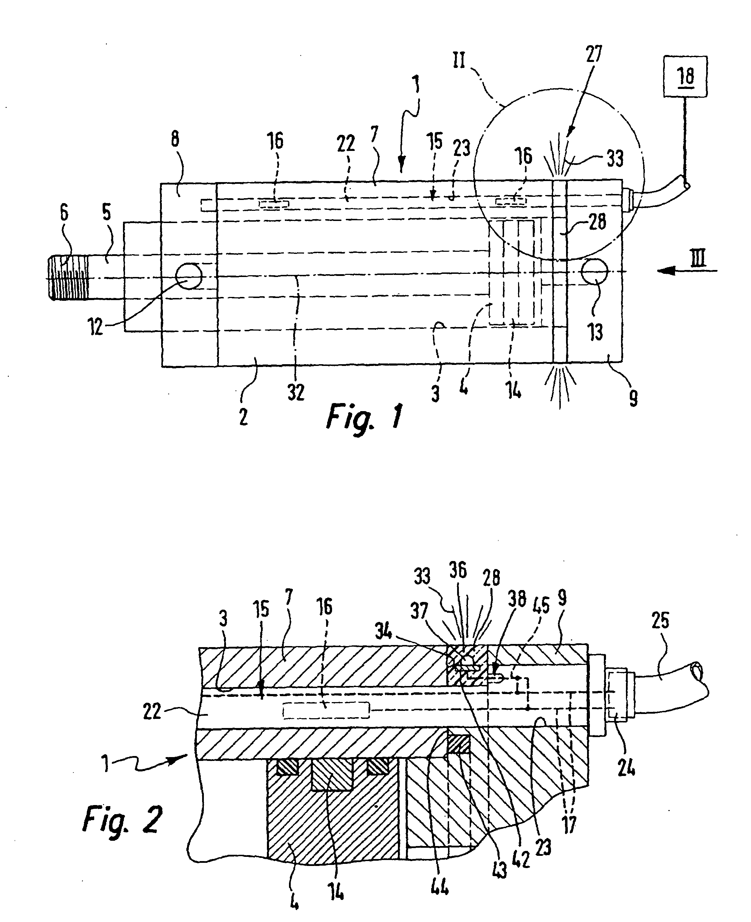

Beim Ausführungsbeispiel der Fig. 1 bis 3 enthält die Sensoreinrichtung 15 einen stab- oder stangenartigen Sensorträger 22, der von der rückwärtigen Stirnseite des Gehäuses 2 her in eine längliche Ausnehmung 23 komplementären Querschnittes eingesteckt ist, die sich in der Wandung des Gehäuses 2 neben dem Innenraum 3 parallel zu diesem erstreckt. Die Sensoren 16 sind zweckmäßigerweise im Innern des Sensorträgers 22 untergebracht, wobei die mit ihnen in Verbindung stehenden elektrischen Leiter 17 zu einer am äußeren Ende des Sensorträgers 22 vorgesehenen elektrischen Anschlußeinrichtung 24 führen, an die ein weiterführendes elektrisches Kabel 25 anschließbar ist, das zu der Steuereinrichtung 18 führt.

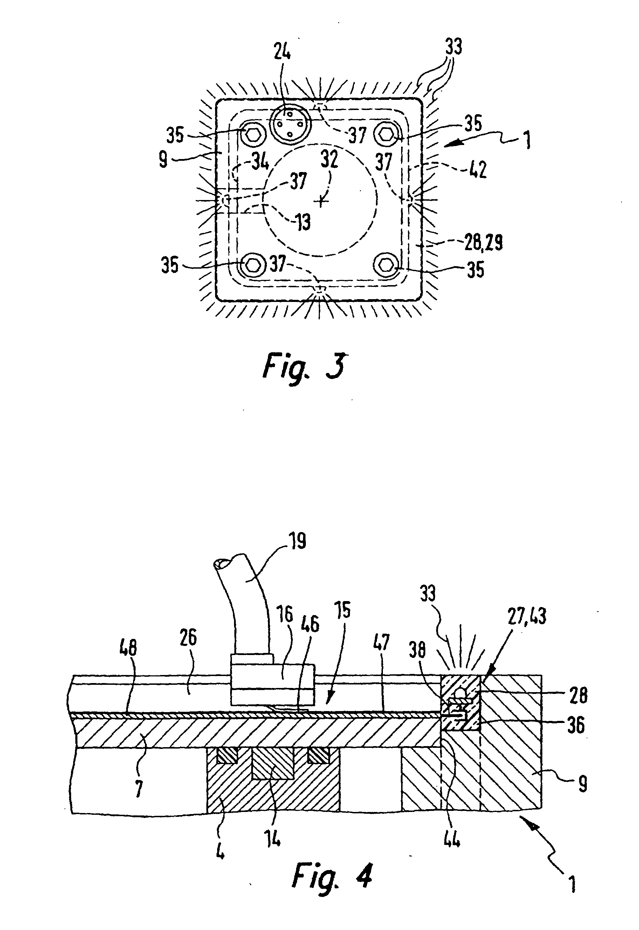

Beim Ausführungsbeispiel der Fig. 4 sind die Sensoren 16 in einer in den Außenumfang des Gehäuses 2 eingebrachten und sich in Längsrichtung des Gehäuses 2 erstreckenden Haltevertiefung 26 verankert. Ihre Verbindung zu einer nicht näher dargestellten Steuereinrichtung kann hier beispielsweise durch unmittelbar vom jeweiligen Sensor 16 abgehende Kabel 19 erfolgen.

Allen Antriebsvorrichtungen 1 ist jeweils eine Anzeigeeinrichtung 27 zugeordnet, die eine optische Anzeige des Schaltzustandes der Sensoreinrichtung 15 ermöglicht. Die Auslegung ist so getroffen, daß die Anzeigeeinrichtung 27 bei jeder Betätigung eines Sensors 16 ein Lichtsignal aussendet, was der Beobachter als Meldung dahingehend zu verstehen hat, daß das Antriebsteil 4 eine bestimmte Relativposition bezüglich des Gehäuses 2 einnimmt. In der Regel wird man durch die Sensoreinrichtung 15 zumindest eine, vorzugsweise beide Endlagen des Antriebsteils 4 abfragen.

Die Anzeigeeinrichtung 27 ist bei den Ausführungsbeispielen jeweils nur einfach vorhanden. Es versteht sich jedoch, daß auch eine Mehrfachanordnung möglich wäre. So könnte insbesondere jedem einzelnen Sensor 16 eine eigene Anzeigeeinrichtung 27 zugeordnet sein, so daß für den Betrachter klar ist, welcher Sensor 16 beim Aufleuchten einer Anzeigeeinrichtung 27 aktiviert wurde.

Ferner ist darauf hinzuweisen, daß durch die Anzeigeeinrichtung selbstverständlich auch andere Betriebszustände, die für die Antriebsvorrichtung 1 relevant sind, angezeigt werden können. Auch die Art der auf einen bestimmten Betriebszustand ansprechenden Sensoren kann variieren, so daß beispielsweise auch der Schaltzustand von Drucksensoren oder von mechanisch betätigten Sensoren angezeigt werden könnte.

Die Anzeigeeinrichtung 27 enthält als wesentlichen Bestandteil ein Anzeigeelement 29, das derart gehäusefest angeordnet ist, daß es das Gehäuse 2 ganz oder teilweise umschließt, wobei sich im Zusammenhang mit einem länglichen Gehäuse 2 eine diesbezüglich koaxiale Anbringung empfiehlt, wie dies gut aus Fig. 1, 3 und 5 hervorgeht. Das Zentrum des Anzeigeelementes 29 fällt hier mit der Längsachse 32 des Gehäuses 2 zusammen.

Das Anzeigeelement 29 ist so ausgebildet, daß es über den Umfangsbereich des Gehäuses 2, über den es sich erstreckt, verteilt Licht aussendet, wenn es sich in einem Anzeigezustand befindet. Ein solcher Anzeigezustand liegt beim Ausführungsbeispiel dann vor, wenn die Sensoreinrichtung 15 aktiviert ist.

Die Lichtsignale des Anzeigeelements 29, die in der Zeichnung durch Bezugsziffer 33 angedeutet sind, lassen sich von einem Beobachter gut erkennen, ungeachtet davon, welcher Umfangsabschnitt des Gehäuses 2 dem Beobachter zugewandt ist. Dies hat zur Folge, daß bei der Montage der Antriebsvorrichtung 1 keine besondere Rücksicht auf die Anbringung der Anzeigeeinrichtung 27 genommen werden muß. Selbst bei einer Installation der Antriebsvorrichtung 1 unter ungünstigen Platzbedingungen kann somit stets eine gute Überwachung des Betriebszustandes gewährleistet werden.

Das Anzeigeelement könnte beispielsweise radial oder axial außen auf das Gehäuse 2 aufgesetzt sein. Es könnte auch in das Gehäuse 2 integriert sein, insbesondere derart, daß es dieses ein Stück weit radial überragt. Die Ausführungsbeispiele zeigen eine bevorzugte Variante, bei der das Anzeigeelement 29 vollständig in das Gehäuse 2 integriert ist, so daß seine nach radial außen orientierte Außenfläche etwa bündig mit den benachbarten Außenflächen des Gehäuses 2 verläuft.

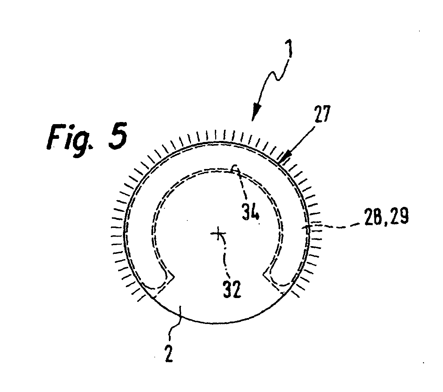

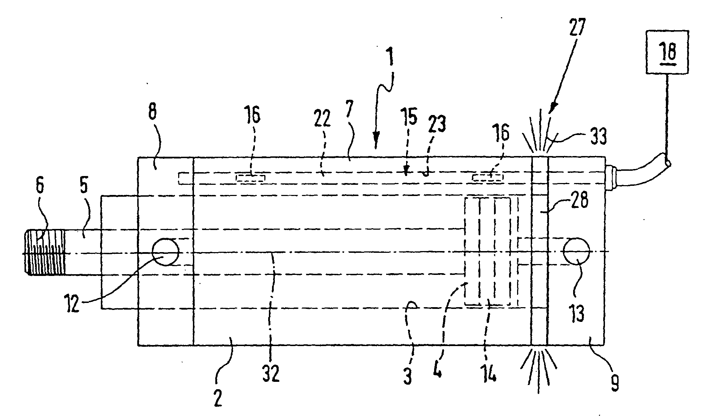

Bei den Ausführungsbeispielen der Fig. 1 bis 4 ist das Anzeigeelement 29 als in sich geschlossener Anzeigering 28 ausgebildet, der sich entlang eines gesamten Umfanges des zugeordneten Gehäuses 2 erstreckt. Allerdings ist eine geschlossene Ringform nicht zwingend. Es wurde festgestellt, daß bereits bei einem Anzeigeelement, dessen Länge so gewählt ist, daß es sich über einen Umfangswinkel von lediglich mindestens 180° entlang des Gehäuseumfanges erstreckt, sehr gute Sichtverhältnisse zum Erkennen des Anzeigezustandes vorliegen. Eine solche Bauform ist in Fig. 5 angedeutet, bei der das Anzeigeelement eine bogenförmige Gestalt hat. Die Bogenlänge kann beispielsweise in der Größenordnung von etwa 270° liegen, so daß man auch von einem an einer Umfangsstelle unterbrochenen Anzeigering sprechen kann.

Die weiteren Ausführungen orientieren sich an einem Anzeigeelement 29, das als in sich geschlossener Anzeigering 28 konzipiert ist, haben aber auch für alle anderen Formgebungen Gültigkeit.

Das Gehäuse 2 enthält beim Ausführungsbeispiel eine nach radial außen hin offene ringförmige Aufnahmevertiefung 34, die konzentrisch zum Gehäuse 2 angeordnet ist. Damit sich der Anzeigering 28 problemlos montieren läßt, ist die Aufnahmevertiefung 34 beim Ausführungsbeispiel von einem zwischen dem hinteren Deckel 9 und dem rohrförmigen Körper 7 definierten Zwischenraum gebildet, in den sich der Anzeigering 28 bei abgenommenem Deckel 9 einsetzen läßt. Der Deckel 9 ist hierzu über Schrauben 35 oder sonstige Befestigungsmittel lösbar mit dem rohrförmigen Körper 7 verbunden. Ist das Anzeigeelement 29 nicht ringförmig in sich geschlossen, kann die Aufnahmevertiefung 34 eine in der Länge entsprechend verkürzte angepaßte Gestalt haben, wie dies aus Fig. 5 hervorgeht.

Es versteht sich, daß der Anzeigering 28 auch zwischen dem vorderen Deckel 8 und dem rohrförmigen Körper 7 installiert werden kann. Besonders zweckmäßig ist eine Variante, bei der zwei Anzeigeringe vorhanden sind, die jeweils einem der beiden Deckel 8, 9 zugeordnet sind und beispielsweise dazu dienen können, die jeweils zugeordnete Endlage des Antriebsteils 4 optisch anzuzeigen.

Im übrigen können auch an sonstiger geeigneter Stelle des Gehäuses 2 Anzeigeringe 28 in einer gewünschten Mehrzahl vorgesehen werden. Ferner wäre es möglich, mindestens einen Anzeigering 28 stirnseitig vorne und/oder hinten am Gehäuse 2 zu plazieren.

Der bei den Ausführungsbeispielen zum Einsatz gelangende Anzeigering 28 verfügt über einen zumindest partiell und vorzugsweise in seiner Gesamtheit lichtdurchlässigen ringförmigen Anzeigekörper 36, wobei ein nach Bedarf eingefärbtes Kunststoffmaterial zur Anwendung gelangen kann. In diesen Anzeigekörper 36 sind, in Längsrichtung, d.h. über den Umfang des Gehäuse 2 punktuell verteilt, mehrere Leuchtmittel integriert, insbesondere LEDs. Sie sind vom Material des Anzeigekörpers 36 zweckmäßigerweise vollständig umgeben und gekapselt. Über eine geeignete elektrische Schnittstelle 38, die als Steckverbindungseinrichtung ausgeführt sein kann, stehen sämtliche Leuchtmittel 37 entweder direkt oder unter Vermittlung der Steuereinrichtung 18 mit der Sensoreinrichtung 15 bzw. deren einzelnen Sensoren 16 in elektrischer Verbindung. Wird ein Sensor 16 betätigt, erhalten die Leuchtmittel 37 ein entsprechendes Signal, das sie zur Lichtausgabe veranlaßt, so daß der Anzeigezustand des Anzeigeringes 28 vorliegt. Zweckmäßigerweise verfügt der Anzeigekörper 36 über derart lichtleitende Eigenschaften, daß auch bei einer geringen Anzahl von Leuchtmitteln 37 ein Leuchteffekt entlang des gesamten Umfanges auftritt, wie dies in Fig. 3 angedeutet ist. Es versteht sich jedoch, daß bei Bedarf auch auf ein einziges Leuchtmittel 37 in Gestalt eines Leuchtbandes zurückgegriffen werden kann, das sich über die gesamte in Umfangsrichtung des Gehäuses 2 gemessene Länge des Anzeigekörpers 36 erstreckt.

Die Leuchtmittel 37 sind beim Ausführungsbeispiel dadurch im Anzeigekörper 36 fixiert und gleichzeitig elektrisch mit der Schnittstelle 38 verbunden, daß sie auf einer Leiterplatte 42 sitzen, die bei ringförmiger Gestaltung des Anzeigeelementes 29 vorzugsweise ringförmige Gestalt hat und konzentrisch in den Anzeigekörper 36 eingebettet ist. Die Schnittstelle 38 befindet sich zweckmäßigerweise an einer Axialseite des Anzeigekörpers 36.

Die Lichtenergie könnte dem Anzeigering 28 alternativ auch über Lichtleiter zugeführt werden. In diesem Falle könnte die Schnittstelle 38, sofern vorhanden, als optische Schnittstelle ausgeführt werden. Bei einer solchen Bauform könnte innerhalb des Anzeigekörpers 36 auf elektrisch betätigte Leuchtmittel verzichtet werden.

In aller Regel wird der Anzeigering 28 eine reine Anzeigefunktion haben, was es auch ermöglicht, das Material des Ringkörpers 36 gezielt so auszuwählen, daß die gewünschten optischen Eigenschaften vorhanden sind. Es wäre allerdings durchaus möglich, auch noch eine Dichtfunktion in den Anzeigering 28 zu integrieren, wie dies beim Ausführungsbeispiel der Fig. 4 der Fall ist. Hier übernimmt der Anzeigering 28 gleichzeitig die Funktion einer ringförmigen Dichtung 43, die zwischen dem Deckel 9 und dem rohrförmigen Körper 7 plaziert ist, um die Verbindung zwischen diesen beiden Gehäusebestandteilen fluiddicht zu gestalten. In diesem Falle wird für den Anzeigekörper 36 zweckmäßigerweise ein Material gewählt, das über ausreichende Dichteigenschaften verfügt, beispielsweise ein Elastomermaterial. Durch zwischen den beiden Gehäusebestandteilen 7, 9 wirkende Anschlagmittel 44 wird verhindert, daß der Anzeigering 28 in der Aufnahmevertiefung 34 zerquetscht wird.

Bei der Ausführungsform der Fig. 1 bis 3 wird die eben beschriebene Dichtfunktion durch einen separaten Dichtring 43 erfüllt, der zwischen dem Deckel 9 und dem rohrförmigen Körper 7 plaziert ist.

Beim Ausführungsbeispiel der Fig. 1 bis 3 ist der Anzeigering 28 über seine Schnittstelle 38 zweckmäßigerweise unmittelbar an den Sensorträger 22 angeschlossen, innerhalb dessen über Verbindungsleiter 45 eine elektrische Verbindung zu den elektrischen Leitern 17 erfolgen kann, die zu den Sensoren 16 führen.

Die Fig. 4 zeigt eine abweichende Bauform, bei der die Sensoren 16 über insbesondere als Schleifkontakte ausgebildete Berührkontakte 46 mit einer oder mehreren Leiterbahnen 47 in Kontakt stehen, die sich entlang der Haltevertiefung 26 erstrecken und über die Schnittstelle 38 mit den Leuchtmitteln 37 des Anzeigeringes 28 verbunden sind. Die Leiterbahnen 47 können unmittelbar in das Gehäuse 2 integriert sein oder befinden sich beispielsweise an einer Leiterplatte 48, die gehäusefest fixiert ist und sich insbesondere im Innern der Haltevertiefung 26 befindet.

Die Fig. 3 macht deutlich, daß der Anzeigering nicht notwendigerweise eine kreisringförmige Gestalt haben muß. Seine Formgebung kann sich insbesondere an der äußeren Gestalt des Gehäuses 2 der Antriebsvorrichtung 1 orientieren. In Anpassung an die beim Ausführungsbeispiel vorhandene quadratische Querschnittskontur des Gehäuses 2 hat hier der Anzeigering 28 einen entsprechend mehreckförmigen, dem Umriß eines Quadrates folgenden Ringverlauf. Die Eckenbereiche können abgerundet sein.

## Patentansprüche

1. Anzeigeeinrichtung zum optischen Anzeigen eines für eine Antriebsvorrichtung (1) relevanten Betriebszustandes, wobei die Antriebsvorrichtung (1) ein in einem Gehäuse (2) bewegbares Antriebsteil (4) aufweist, **gekennzeichnet durch** ein Anzeigeelement (29), das in einer sich entlang mindestens 180° eines Umfangs des Gehäuses (2) der Antriebsvorrichtung (1) erstreckenden Weise an dem Gehäuse (2) angeordnet oder anzuordnen ist und das in der dem Gehäuse (2) zugeordneten Gebrauchsposition während seines Anzeigezustandes über den zugeordneten Gehäuseumfang verteilt Licht aussendet.

2. Anzeigeeinrichtung nach Anspruch 1, **dadurch gekennzeichnet, daß** der anzuzeigende Betriebszustand der Schaltzustand einer Sensoreinrichtung (15) der Antriebsvorrichtung (1) ist.

3. Anzeigeeinrichtung nach Anspruch 1 oder 2, **dadurch gekennzeichnet, daß** es sich bei der Antriebsvorrichtung (1) um einen elektrisch und/oder fluidisch betätigten Linearantrieb handelt, beispielsweise um einen fluidbetätigten Arbeitszylinder.

4. Anzeigeeinrichtung nach einem der Ansprüche 1 bis 3, **dadurch gekennzeichnet, daß** das Anzeigeelement (29) im am Gehäuse der Antriebsvorrichtung (1) angeordneten Zustand koaxial zu diesem Gehäuse (2) plaziert ist.

5. Anzeigeeinrichtung nach einem der Ansprüche 1 bis 4, **dadurch gekennzeichnet, daß** das Anzeigeelement (29) in einer nach radial außen hin offenen Aufnahmevertiefung (34) des Gehäuses (2) angeordnet ist.

6. Anzeigeeinrichtung nach Anspruch 5, **dadurch gekennzeichnet, daß** die Aufnahmevertiefung (34) von einem zwischen zwei Bestandteilen (7, 9) des Gehäuses (2) definierten Zwischenraum gebildet ist.

7. Anzeigeeinrichtung nach Anspruch 6, **dadurch gekennzeichnet, daß** es sich bei den beiden Bestandteilen um einen rohrförmigen Körper (7) und einen daran angebrachten Deckel (9) des Gehäuses (2) handelt.

8. Anzeigeeinrichtung nach einem der Ansprüche 1 bis 7, **dadurch gekennzeichnet, daß** das Anzeigeelement (29) einen zumindest partiell lichtdurchlässige und/oder lichtleitende Eigenschaften aufweisenden Anzeigekörper (36) enthält, der mit mindestens einem Leuchtmittel (37), insbesondere eine Leuchtdiode, versehen ist.

9. Anzeigeeinrichtung nach Anspruch 8, **dadurch gekennzeichnet, daß** das mindestens eine Leuchtmittel (37) in den Anzeigekörper (36) eingebettet ist.

10. Anzeigeeinrichtung nach Anspruch 8 oder 9, **dadurch gekennzeichnet, daß** der Anzeigekörper (36) entlang seiner gesamten Länge lichtdurchlässig und/oder lichtleitend ausgebildet ist.

11. Anzeigeeinrichtung nach einem der Ansprüche 8 bis 10, **gekennzeichnet durch** eine Mehrzahl über die Länge des Anzeigekörpers (36) verteilt angeordnete Leuchtmittel (37).

12. Anzeigeeinrichtung nach einem der Ansprüche 8 bis 11, **dadurch gekennzeichnet, daß** das mindestens eine Leuchtmittel (37) an einer dem Anzeigekörper (36) zugeordneten Leiterplatte (42) vorgesehen ist.

13. Anzeigeeinrichtung nach einem der Ansprüche 8 bis 12, **dadurch gekennzeichnet, daß** der Anzeigekörper (36) aus Kunststoffmaterial besteht und dabei vorzugsweise aus Material mit Dichteigenschaften.

14. Anzeigeeinrichtung nach einem der Ansprüche 1 bis 13, **dadurch gekennzeichnet, daß** das Anzeigeelement (29) eine zwischen zwei Bestandteilen (7, 9) des Gehäuses (2) wirkende Dichtung (43) bildet.

15. Anzeigeeinrichtung nach einem der Ansprüche 1 bis 14, **dadurch gekennzeichnet, daß** das Anzeigeelement (29) eine Schnittstelle (38) zur Einspeisung des die Lichtausgabe hervorrufenden Signals aufweist.

16. Anzeigeeinrichtung nach einem der Ansprüche 1 bis 15, **dadurch gekennzeichnet, daß** das Anzeigeelement (29) mit einer der Antriebsvorrichtung (1) zugeordneten Sensoreinrichtung (18) gekoppelt ist, insbesondere mit einer zur Erfassung mindestens einer Position des Antriebsteils (4) dienenden Sensoreinrichtung (15).

17. Anzeigeeinrichtung nach einem der Ansprüche 1 bis 16, **dadurch gekennzeichnet, daß** das Anzeigeelement (29) derart gestaltet ist, daß seine radiale Außenfläche etwa bündig mit den benachbarten Außenflächen des Gehäuses (2) verläuft.

18. Anzeigeeinrichtung nach einem der Ansprüche 1 bis 17, **dadurch gekennzeichnet, daß** das Anzeigeelement (29) als sich in Gebrauchsposition über vorzugsweise den gesamten Umfang des Gehäuses (2) der Antriebsvorrichtung (1) erstreckender Anzeigering (28) ausgeführt ist.

19. Anzeigeeinrichtung nach Anspruch 18 in Verbindung mit Anspruch 5 oder 6, **dadurch gekennzeichnet, daß** der Anzeigering (28) in einer ringförmigen Aufnahmevertiefung (34) des Gehäuses (2) angeordnet ist.

20. Anzeigeeinrichtung nach Anspruch 18 oder 19 in Verbindung mit Anspruch 12, **dadurch gekennzeichnet, daß** die Leiterplatte (42) ringförmig ausgebildet und konzentrisch zu dem ebenfalls ringförmigen Anzeigekörper (36) angeordnet ist.

21. Anzeigeeinrichtung nach einem der Ansprüche 18 bis 20, **dadurch gekennzeichnet, daß** das Anzeigeelement (29) kreisringförmig ausgebildet ist.

22. Anzeigeeinrichtung nach einem der Ansprüche 18 bis 20, **dadurch gekennzeichnet, daß** das Anzeigeelement (29) einen mehreckförmigen und beispielsweise quadratischen Ringverlauf hat.

## Claims

1. Display unit for the optical display of an operating state relevant to a drive unit (1), wherein the drive unit (1) has a drive section (4) movable in a housing (2), **characterised by** an indicator element (29) arranged or to be arranged on the housing (2) so as to extend along at least 180° of a periphery of the housing (2) of the drive unit (1) and which, in the position of use assigned to the housing (2) emits, during its display state, light distributed over the assigned housing periphery.

2. Display unit according to claim 1, **characterised in that** the operating state to be displayed is the switching state of a sensor device (15) of the drive unit (1).

3. Display unit according to claim 1 or 2, **characterised in that** the drive unit (1) is an electrically and/or fluidically actuated linear drive, for example a fluid-actuated operating cylinder.

4. Display unit according to any of claims 1 to 3, **characterised in that** the indicator element (29) is positioned, when mounted on the housing of the drive unit (1), coaxially to this housing (2).

5. Display unit according to any of claims 1 to 4, **characterised in that** the indicator element (29) is mounted in a locating recess (34) of the housing (2) which is open radially outwards.

6. Display unit according to claim 5, **characterised in that** the locating recess (34) is formed by an intermediate space defined between two elements (7, 9) of the housing (2).

7. Display unit according to claim 6, **characterised in that** the two elements are a tubular body (7) and a cover (9) of the housing (2) attached to this body.

8. Display unit according to any of claims 1 to 7, **characterised in that** the indicator element (29) contains a indicator body (36) with at least partially light-transmissive and/or light-conducting properties, and which is provided with one or more lighting means (37), in particular a light-emitting diode.

9. Display unit according to claim 8, **characterised in that** the lighting means (37) are embedded in the indicator body (36).

10. Display unit according to claim 8 or 9, **characterised in that** the indicator body (36) is designed to be light-transmissive and/or light-conducting along its entire length.

11. Display unit according to any of claims 8 to 10, **characterised by** a multiplicity of lighting means (37) distributed over the length of the indicator body (36).

12. Display unit according to any of claims 8 to 11, **characterised in that** the lighting means (37) are provided on a printed circuit board (42) assigned to the indicator body (36).

13. Display unit according to any of claims 8 to 12, **characterised in that** the indicator body (36) is made of plastic material and at the same time preferably of material with sealing properties.

14. Display unit according to any of claims 1 to 13, **characterised in that** the indicator element (29) forms a seal (43) acting between two elements (7, 9) of the housing (2).

15. Display unit according to any of claims 1 to 14, **characterised in that** the indicator element (29) has an interface (38) for supplying the signal which initiates the light emission.

16. Display unit according to any of claims 1 to 15, **characterised in that** the indicator element (29) is coupled to a sensor device (18) assigned to the drive unit (1), in particular to a sensor device (15) used to detect one or more positions of the drive section (4).

17. Display unit according to any of claims 1 to 16, **characterised in that** the indicator element (29) is so designed that its radial outer surface runs approximately flush with the adjacent outer surfaces of the housing (2).

18. Display unit according to any of claims 1 to 17, **characterised in that** the indicator element (29) is in the form of an indicator ring (28) extending in the position of use over preferably the entire periphery of the housing (2) of the drive unit (1).

19. Display unit according to claim 18 in combination with claim 5 or 6, **characterised in that** the indicator ring (28) is mounted in an annular locating recess (34) of the housing (2).

20. Display unit according to claim 18 or 19 in combination with claim 12, **characterised in that** the printed circuit board (42) is annular in form and is mounted concentrically to the indicator body (36) which is also annular.

21. Display unit according to any of claims 18 to 20, **characterised in that** the indicator element (29) has the shape of a circular ring.

22. Display unit according to any of claims 18 to 20, **characterised in that** that the indicator element (29) has a polygonal and for example square annular shape.

## Revendications

1. Dispositif d'affichage destiné à l'affichage optique d'un état de fonctionnement significatif pour un dispositif d'entraînement (1), le dispositif d'entraînement (1) présentant une partie d'entraînement (4) susceptible de se déplacer à l'intérieur d'un boîtier (2), **caractérisé par** un élément d'affichage (29) qui est ou doit être placé sur le boîtier (2) de telle sorte qu'il s'étende sur au moins 180° d'une périphérie du boîtier (2) du dispositif d'entraînement (1) et qui, dans la position d'utilisation, associée au boîtier (2), dans son état d'affichage, émet une lumière répartie sur la périphérie de boîtier associée.

2. Dispositif d'affichage selon la revendication 1, **caractérisé en ce que** l'état de fonctionnement qu'il convient d'afficher est l'état de commutation d'un dispositif de détection (15) du dispositif d'entraînement (1).

3. Dispositif d'affichage selon la revendication 1 ou 2, **caractérisé en ce que** le dispositif d'entraînement (1) est un entraînement linéaire électrique et/ou actionné par fluide, par exemple un vérin actionné par fluide.

4. Dispositif d'affichage selon l'une des revendications 1 à 3, **caractérisé en ce que** l'élément d'affichage (29), lorsqu'il se trouve dans l'état où il est placé sur le boîtier du dispositif d'entraînement (1), est disposé coaxialement à ce boîtier (2).

5. Dispositif d'affichage selon l'une des revendications 1 à 4, **caractérisé en ce que** l'élément d'affichage (29) est monté dans un évidement formant logement (34), ouvert radialement vers l'extérieur, du boîtier (2).

6. Dispositif d'affichage selon la revendication 5, **caractérisé en ce que** l'évidement formant logement (34) est constitué par un espace intermédiaire défini entre deux composants (7, 9) du boîtier (2).

7. Dispositif d'affichage selon la revendication 6, **caractérisé en ce que** les deux composants sont un corps tubulaire (7) et un couvercle (9) du boîtier (2) qui est posé sur celui-ci.

8. Dispositif d'affichage selon l'une des revendications 1 à 7, **caractérisé en ce que** l'élément d'affichage (29) contient un corps d'affichage (36) qui, au moins partiellement, est perméable à la lumière et/ou guide les ondes optiques, et qui est équipé d'au moins un moyen d'éclairage (37), en particulier d'une diode luminescente.

9. Dispositif d'affichage selon la revendication 8, **caractérisé en ce qu'**au moins un moyen d'éclairage (37) est encastré dans le corps d'affichage (36).

10. Dispositif d'affichage selon la revendication 8 ou 9, **caractérisé en ce que** le corps d'affichage (36), sur toute sa longueur, est perméable à la lumière et/ou guide les ondes optiques.

11. Dispositif d'affichage selon l'une des revendications 8 à 10, **caractérisé par** une pluralité de moyens d'éclairage (37) répartis sur la longueur du corps d'affichage (36).

12. Dispositif d'affichage selon l'une des revendications 8 à 11, **caractérisé en ce que** le moyen d'éclairage (37), au nombre d'au moins un, est prévu sur une carte de circuit imprimé (42) associée au corps d'affichage (36).

13. Dispositif d'affichage selon l'une des revendications 8 à 12, **caractérisé en ce que** le corps d'affichage (36) est constitué en matière synthétique et, de préférence, en une matière présentant des caractéristiques d'étanchéité.

14. Dispositif d'affichage selon l'une des revendications 1 à 13, **caractérisé en ce que** l'élément d'affichage (29) constitue un joint (43) qui exerce son action entre deux composants (7, 9) du boîtier (2).

15. Dispositif d'affichage selon l'une des revendications 1 à 14, **caractérisé en ce que** l'élément d'affichage (29) présente une interface (38) pour l'entrée du signal qui provoque l'émission de lumière.

16. Dispositif d'affichage selon l'une des revendications 1 à 15, **caractérisé en ce que** l'élément d'affichage (29) est couplé à un dispositif de détection (18) associé au dispositif d'entraînement (1), en particulier à un dispositif de détection (18) qui sert à détecter au moins une position de la partie d'entraînement (4).

17. Dispositif d'affichage selon l'une des revendications 1 à 16, **caractérisé en ce que** l'élément d'affichage (29) est conçu de telle sorte que sa surface extérieure radiale s'étende approximativement sur le même plan que les surfaces extérieures voisines du boîtier (2).

18. Dispositif d'affichage selon l'une des revendications 1 à 17, **caractérisé en ce que** l'élément d'affichage (29) est conformé en bague d'affichage (28) s'étendant, en position d'utilisation, de préférence sur toute la périphérie du boîtier (2) du dispositif d'entraînement (1).

19. Dispositif d'affichage selon la revendication 18 en combinaison avec la revendication 5 ou 6, **caractérisé en ce que** la bague d'affichage (28) est disposée dans un évidement formant logement annulaire (34) du boîtier (2).

20. Dispositif d'affichage selon la revendication 18 ou 19, en combinaison avec la revendication 12, **caractérisé en ce que** la carte à circuit imprimé (42) est annulaire et montée de façon concentrique au corps d'affichage (36), qui est également annulaire.

21. Dispositif d'affichage selon l'une des revendications 18 à 20, **caractérisé en ce que** l'élément d'affichage (29) est en forme d'anneau circulaire.

22. Dispositif d'affichage selon l'une des revendications 18 à 20, **caractérisé en ce que** l'élément d'affichage (29) présente une allure annulaire polygonale, et, par exemple, carrée.
